# EUROPEAN PATENT APPLICATION

(11) **EP 4 718 531 A1**
(43) Date of publication of application: **01.04.2026**
(21) Application number: 24810731.0
(22) Date of filing: 05.04.2024
(51) Int. Cl.: H01M 4/485, C01G 31/02, H01M 4/131, H01M 4/36, H01M 4/62

(54) **VANADIUM OXIDE COMPOSITE AND BATTERY USING SAME**

(30) Priority: 22.05.2023 JP 2023084079
(71) Applicant: Panasonic Intellectual Property Management Co., Ltd., Kadoma-shi, Osaka 571-0057 (JP)
(72) Inventor: KATAYAMA, Ryuhei, Osaka 571-0057 (JP); TANAKA, Yoshiaki, Osaka 571-0057 (JP); SHINODA, Kaori, Osaka 571-0057 (JP)
(74) Representative: Eisenführ Speiser
(86) International application number: PCT/JP2024/014078
(87) International publication number: WO 2024/241723

(57) **Abstract**

A vanadium oxide composite of the present disclosure includes: a particle including a vanadium oxide represented by a composition formula (1) Li₃₊ₓ₊ₐV₁₋ₓMₓO_{4+a/2}; and an electrically conductive material at least partially coating a surface of the particle. In the composition formula (1), 0 < a < 1 and 0 ≤ x < 1 are satisfied, and M is at least one element selected from the group consisting of a tetravalent metal element and a tetravalent metalloid element.

## Description

### TECHNICAL FIELD

The present invention relates to a vanadium oxide composite and a battery including the same.

### BACKGROUND ART

Since having a low reaction potential and a high capacity, Li₃VO₄ has attracted attention as a next-generation negative electrode active material. Patent Literature 1 discloses a non-aqueous secondary battery including Li₃VO₄ as a negative electrode active material.

Patent Literature 2 discloses a power storage device including, as a negative electrode active material, a material having a double-layered structure composed of an inner layer and an outer layer shell, the material including a lithium vanadium oxide and carbon, the inner layer being formed of particles of the lithium vanadium oxide that gather while preserving their grain boundaries, the outer layer shell wrapping the inner layer, the outer layer shell being formed of at least portion of the particles of the lithium vanadium oxide that are joined without forming grain boundaries.

### CITATION LIST

### Patent Literature

Patent Literature 1: JP 2008-077847 A
Patent Literature 2: JP 2022-021220 A

### SUMMARY OF INVENTION

### Technical Problem

The present disclosure provides a new vanadium oxide composite that can be used as a battery material.

### Solution to Problem

A vanadium oxide composite according to the present disclosure includes:
a particle including a vanadium oxide represented by a composition formula (1) Li₃₊ₓ₊ₐV₁₋ₓMₓO_{4+a/2}, where 0 < a < 1 and 0 ≤ x < 1 are satisfied, and M is at least one element selected from the group consisting of a tetravalent metal element and a tetravalent metalloid element; and
an electrically conductive material at least partially coating a surface of the particle.

### Advantageous Effects of Invention

The present disclosure provides a new vanadium oxide composite that can be used as a battery material.

### BRIEF DESCRIPTION OF DRAWINGS

FIG. 1 is a cross-sectional view showing a vanadium oxide composite 100 according to a first embodiment.
FIG. 2 is a cross-sectional view showing a battery 1000 according to a second embodiment.
FIG. 3 is a cross-sectional view showing an electrode material 200 according to the second embodiment.
FIG. 4 is a graph showing initial discharge characteristics and 10C discharge characteristics of a battery of Example 1.

### DESCRIPTION OF EMBODIMENTS

Embodiments of the present disclosure will be described hereinafter with reference to the drawings. The present disclosure is not limited to the embodiments below.

### (First embodiment)

A vanadium oxide composite according to a first embodiment includes: a particle including a vanadium oxide represented by the following composition formula (1); and an electrically conductive material at least partially coating a surface of the particle. In the composition formula (1), 0 < a < 1 and 0 ≤ x < 1 are satisfied, and M is at least one element selected from the group consisting of a tetravalent metal element and a tetravalent metalloid element.

Li₃₊ₓ₊ₐV₁₋ₓMₓO_{4+a/2} (1)

The vanadium oxide composite according to the first embodiment can be used as a battery material. The vanadium oxide composite according to the first embodiment can be used, for example, as a negative electrode active material. The vanadium oxide composite according to the first embodiment can be used, for example, to obtain a battery having excellent charge and discharge characteristics. The vanadium oxide composite according to the first embodiment is suitable, for example, for increasing the battery capacity. The battery is, for example, a solid-state battery. The solid-state battery may be a primary battery or a secondary battery.

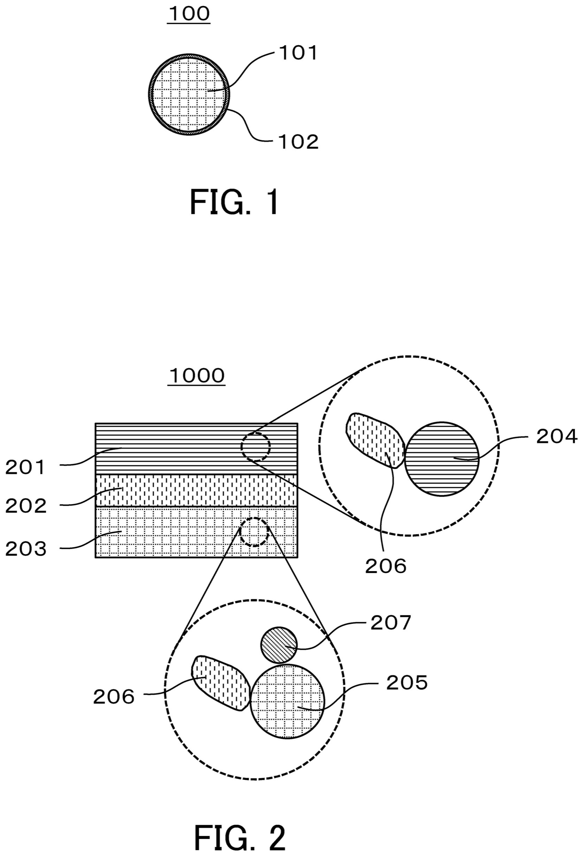

FIG. 1 is a cross-sectional view showing a vanadium oxide composite 100 according to the first embodiment.

The vanadium oxide composite 100 includes: a particle 101 including a vanadium oxide; and an electrically conductive material 102.

The vanadium oxide is represented by the above composition formula (1). In the composition formula (1), 0 < a < 1 and 0 ≤ x < 1 are satisfied, and M is at least one element selected from the group consisting of a tetravalent metal element and a tetravalent metalloid element. The electrically conductive material 102 has electron conductivity. The electrically conductive material 102 at least partially coats a surface of the particle 101 including the vanadium oxide. Thus, a lot of electron conduction paths are formed between the particle 101 including the vanadium oxide and the electrically conductive material 102. Consequently, the vanadium oxide composite 100 has enhanced electron conductivity.

In the present embodiment, 0 < a < 1 is satisfied in the composition formula (1). That is, the vanadium oxide includes Li and O in amounts exceeding those derived from stoichiometric composition. In this case, for example, the capacity of a battery including the vanadium oxide composite 100 is increased. This is because excessive amounts of Li and O enhance the electron conductivity of the vanadium oxide, facilitating insertion of Li into and extraction of Li from the vanadium oxide composite 100. The stoichiometric composition means composition where a molar ratio between the elements forming the vanadium oxide is expressed by integral multiples. For example, Li₃VO₄ has stoichiometric composition.

Li and O in amounts expressed with "a" in the composition formula (1) may be inside the particle 101, or may be present outside the particle 101 as a second phase different from a first phase forming the particle 101. It should be noted that each of the vanadium oxides disclosed in Patent Literatures 1 and 2 does not include Li and O in amounts comparable to those expressed with "a".

In the present embodiment, the particle 101 includes the vanadium oxide represented by the above composition formula (1). The particle 101 may be a particle including the vanadium oxide represented by the above composition formula (1) as its principal component. The particle 101 including the vanadium oxide as its principal component refers to a particle in which the component having the highest mass content is the vanadium oxide. The particle 101 may be a particle consisting of the vanadium oxide represented by the above composition formula (1). The particle 101 has, for example, a spherical shape.

In the composition formula (1), 0.2 ≤ a ≤ 0.6 may be satisfied. In this case, the vanadium oxide composite 100 can increase the battery capacity.

In the composition formula (1), 0 < x < 1 may be satisfied. In this case, the capacity of a battery including the vanadium oxide composite 100 is further increased. This is because, in this case, the pentavalent V element is substituted by the tetravalent metal element and/or the tetravalent metalloid element, and thus a positively charged hole and/or a Li ion becomes a charge carrier, i.e., insertion of Li into and extraction of Li from the vanadium oxide composite 100 are facilitated.

In the composition formula (1), 0 < x ≤ 0.1 may be satisfied. In this case, the capacity of a battery including the vanadium oxide composite 100 is further increased. This is because, when 0 < x ≤ 0.1 is satisfied in the composition formula (1), substitution by the tetravalent metal element and/or the tetravalent metalloid element occurs while a crystal structure of the vanadium oxide composite 100 is maintained, and thus insertion of Li into and extraction of Li from the vanadium oxide composite 100 are further facilitated.

As described above, M is at least one element selected from the group consisting of the tetravalent metal element and the tetravalent metalloid element. Examples of the tetravalent metal element and the tetravalent metalloid element include Ti, Zr, Si, Ge, and Sn. When the pentavalent V element is substituted by the tetravalent metal element and/or the tetravalent metalloid element, a hole and/or a Li ion becomes a charge carrier. This further facilitates insertion of Li into and extraction of Li from the vanadium oxide.

In the composition formula (1), M may include Ti. In this case, the vanadium oxide composite 100 can increase the battery capacity. Among the tetravalent metal elements, the ionic radius of Ti is closest to the ionic radius of V which is to be substituted. Therefore, when M includes Ti, substitution by Ti occurs while the crystal structure of the vanadium oxide composite 100 is maintained. As a result, insertion of Li into and extraction of Li from the vanadium oxide composite 100 are further facilitated.

In the composition formula (1), M may be Ti. In this case, the vanadium oxide composite 100 can further increase the battery capacity.

A surface coverage R of the particle 101 by the electrically conductive material 102 may be 30% or more. The surface coverage R may be 100%, or less than 100%. In this case, the vanadium oxide composite 100 can increase the battery capacity.

The surface coverage R in the vanadium oxide composite 100 can be determined by the following method using a pellet, electrode, or battery including particles of the vanadium oxide composite 100 (hereinafter referred to as "pellet or the like"). First, the pellet or the like is processed using an ion milling apparatus to form a flat and smooth cross-section. A direction of the processing for forming the cross-section may be any direction in the pellet or the like. The formed cross-section is observed using a scanning electron microscope (SEM) to obtain a SEM image. For each of N particles of the vanadium oxide composite 100 in the SEM image, a perimeter P thereof and a total length C of portion(s) coated with the electrically conductive material 102 are measured. The symbol N represents an integer equal to or greater than 2, and N is, for example, 50. An average of values calculated by 100 × C/P is considered the surface coverage R. Note that there is no need to observe all particles of the vanadium oxide composite 100 in the formed cross-section. Even when the SEM image shows only a portion of the formed cross-section, the surface coverage R can be calculated for N particles of the vanadium oxide composite 100 in that portion. It should be noted that the electrically conductive material 102 that can be observed using a SEM has a thickness of more than 3 nm. Therefore, the surface coverage R is determined using the electrically conductive material 102 having a thickness of more than 3 nm.

The surface coverage R may be 40% or more. In this case, the vanadium oxide composite 100 can further increase the battery capacity.

The surface coverage R may be 55% or more. In this case, the vanadium oxide composite 100 can further increase the battery capacity.

The surface coverage R may be 70% or less. In this case, insertion of Li into and extraction of Li from the vanadium oxide composite 100 can be facilitated while the electron conductivity is ensured.

The particle 101 including the vanadium oxide may be a primary particle, or may be a secondary particle formed of an aggregation of a plurality of primary particles.

When the particle 101 including the vanadium oxide is a secondary particle, the electrically conductive material 102 may be present inside the particle 101. That is, the electrically conductive material 102 may be present at an interface between primary particles forming the particle 101. When the electrically conductive material 102 is present inside the particle 101, an electron can be transported to the inside of the particle 101 and thus the vanadium oxide composite 100 has further enhanced electron conductivity.

The presence of the electrically conductive material 102 inside the particle 101 can be confirmed, for example, by observing a cross-section of the pellet or the like including the particles of the vanadium oxide composite 100 using a transmission electron microscope (TEM).

The shape of the electrically conductive material 102 itself is not limited to a particular shape. For example, a thin film formed by accumulation of, for example, plate-shaped, acicular, spherical, or ellipsoidal fine particles of the electrically conductive material 102 may at least partially coat the surface of the particle 101 including the vanadium oxide.

The thin film of the electrically conductive material 102 may have an average thickness of 100 nm or less. In this case, insertion of Li into and extraction of Li from the vanadium oxide composite 100 are further facilitated. The average thickness of the thin film of the electrically conductive material 102 can be determined, for example, by observing a cross-section of the pellet or the like including the particles of the vanadium oxide composite 100 with a SEM or a TEM.

The electrically conductive material 102 may include a carbon material. In this case, the vanadium oxide composite 100 can be produced at a low cost.

The electrically conductive material 102 may be a carbon material. In this case, the vanadium oxide composite 100 can be produced at a lower cost.

Examples of the carbon material include graphite (graphene) having a six-membered ring network of carbon atoms and amorphous carbon.

The shape of the vanadium oxide composite 100 is not limited. The shape thereof is, for example, an acicular, spherical, or ellipsoidal shape. The vanadium oxide composite 100 may have a particle shape. The vanadium oxide composite 100 may be formed in the shape of a pellet or a plate.

In the case where the vanadium oxide composite 100 is in particle form (e.g. spherical), the particles of the vanadium oxide composite 100 may have a median diameter of 0.1 µm and 100 µm or less, or a median diameter of 5 µm or more and 10 µm or less. In this case, the vanadium oxide composite 100 and another material can be favorably dispersed. The other material is, for example, a solid electrolyte.

In the present disclosure, the median diameter of particles means the particle size (d50) corresponding to 50% of a cumulative volume in a volumetric particle size distribution. The volumetric particle size distribution can be measured by a laser diffraction measurement device or an image analysis device.

### <Method for manufacturing vanadium oxide composite>

The vanadium oxide composite 100 according to the first embodiment can be manufactured by the following method. As one example, a method for manufacturing the vanadium oxide composite 100 including the particle 101 including the vanadium oxide represented by the composition formula (1), Li₃₊ₓ₊ₐV₁₋ₓMₓO_{4+a/2} (x = 0), will be described hereinafter.

First, raw material powders of the vanadium oxide are prepared so that target composition will be achieved. Examples of the raw material powders of the vanadium oxide include an oxide, a hydroxide, a carbonate, a nitrate, and an organic salt. Here, the raw material powders are prepared so that "a" in the composition formula (1) is greater than 0. A Li raw material powder is prepared in such an excessive amount that a ratio of the Li raw material powder to a V raw material powder exceeds a molar ratio of 3:1, which is a stoichiometric ratio. For example, the Li raw material powder may be prepared in such an excessive amount that the molar ratio of the Li raw material powder to the V raw material powder is in the range from 6:1 to 30:1. For example, lithium hydroxide monohydrate may be used as the Li raw material powder. For example, ammonium vanadate may be used as the V raw material powder.

Furthermore, a raw material powder of the electrically conductive material 102 is prepared. The raw material powder of the electrically conductive material 102 may be prepared in the range from 0.5 mass% to 25 mass% relative to an amount of the V raw material powder, or may be prepared in the range from 1 mass% to 12 mass%. For example, graphene oxide may be used as the raw material powder of the electrically conductive material 102.

Next, a mixture of the Li raw material powder, the V raw material powder, and the raw material powder of the electrically conductive material 102 is dissolved in a solvent to give a raw material solution. For example, water or an organic solvent may be used as the solvent. Examples of the organic solvent include alcohols, such as ethanol and ethylene glycol.

Subsequently, in order to reduce aggregation of synthesized products in the following thermal synthesis, the raw material solution is subjected to a dispersion treatment to give a dispersion solution. For the dispersion treatment, for example, an ultrasonic disperser, a pressure-type disperser, or the like can be used.

Finally, the dispersion solution is heated to cause thermal synthesis in a liquid phase. This results in precipitation of a reaction product, namely, the vanadium oxide composite 100 in a powder form in the liquid. The precipitated vanadium oxide composite 100 is separated from the liquid. The vanadium oxide composite 100 is obtained in this manner. This may be followed by firing of the vanadium oxide composite 100.

The molar ratio at the time of mixing the raw material powders and the molar ratio in the reaction product are not necessarily equal to each other. This is because the raw material powders may not be taken into the reaction product because of evaporation or the like during the thermal synthesis.

The composition of the vanadium oxide in the vanadium oxide composite 100 is determined by quantitative analysis. For example, the values of "x" and "a" in the composition formula (1) are quantified, for example, by high-frequency inductively-coupled plasma (ICP) emission spectrometry. The value of "x" in the composition formula (1) can be determined from an amount of M in the vanadium oxide. The value of "a" in the composition formula (1) can be determined from the amount of Li and the amount of M in the vanadium oxide.

In the vanadium oxide composite 100 manufactured by the above method, the surface of the particle 101 including the vanadium oxide and being a secondary particle is at least partially coated with the electrically conductive material 102. Moreover, the electrically conductive material 102 is also present at an interface between primary particles forming the particle 101.

### (Second embodiment)

A second embodiment will be described hereinafter. The features described in the first embodiment are omitted as appropriate.

A battery according to the second embodiment includes a positive electrode, an electrolyte layer, and a negative electrode. The electrolyte layer is disposed between the positive electrode and the negative electrode. The negative electrode includes the vanadium oxide composite according to the first embodiment.

The battery according to the second embodiment has excellent charge and discharge characteristics.

FIG. 2 is a cross-sectional view showing a battery 1000 according to the second embodiment.

The battery 1000 includes a positive electrode 201, an electrolyte layer 202, and a negative electrode 203. The electrolyte layer 202 is disposed between the positive electrode 201 and the negative electrode 203.

The positive electrode 201 includes positive electrode active material particles 204 and solid electrolyte particles 206.

The electrolyte layer 202 includes an electrolyte material. The electrolyte material is, for example, a solid electrolyte material.

The negative electrode 203 includes negative electrode active material particles 205 and the solid electrolyte particles 206.

The negative electrode active material particle 205 is a particle including the vanadium oxide composite 100 according to the first embodiment. The negative electrode active material particle 205 may be a particle including the vanadium oxide composite 100 as its principal component. The particle including the vanadium oxide composite 100 as its principal component refers to a particle in which the component having the highest mass content is the vanadium oxide composite 100. The negative electrode active material particle 205 may be a particle consisting of the vanadium oxide composite 100. The negative electrode active material particle 205 has, for example, a spherical shape.

The negative electrode active material particles 205 may have a median diameter of 0.1 µm or more and 100 µm or less. In the case where the negative electrode active material particles 205 have a median diameter of 0.1 µm or more, the negative electrode active material particles 205 and the solid electrolyte particles 206 can be favorably dispersed in the negative electrode 203. This improves the charge and discharge characteristics of the battery 1000. In the case where the negative electrode active material particles 205 have a median diameter of 100 µm or less, the diffusion rate of Li in the negative electrode active material particles 205 improves. This can allow the battery 1000 to operate at high power.

The negative electrode active material particles 205 may have a median diameter larger than that of the solid electrolyte particles 206. This can allow favorable dispersion of the negative electrode active material particles 205 and the solid electrolyte particles 206.

In order to increase an energy density and power output of the battery 1000, a ratio of the volume of the negative electrode active material particles 205 to the sum of the volume of the negative electrode active material particles 205 and the volume of the solid electrolyte particles 206 may be 0.30 or more and 0.95 or less in the negative electrode 203.

In order to increase the energy density and power output of the battery 1000, the negative electrode 203 may have a thickness of 10 µm or more and 500 µm or less.

The solid electrolyte particle 206 included in the negative electrode 203 may be a sulfide solid electrolyte, a halide solid electrolyte, an oxide solid electrolyte, or a polymer solid electrolyte.

In the present disclosure, the term "sulfide solid electrolyte" means a solid electrolyte containing sulfur. The term "oxide solid electrolyte" means a solid electrolyte containing oxygen. The oxide solid electrolyte may contain an anion (excluding a sulfur anion and a halogen anion) other than oxygen. The term "halide solid electrolyte" means a solid electrolyte containing a halogen element and being free of sulfur. The halide solid electrolyte may contain not only the halogen element but also oxygen.

Examples of the sulfide solid electrolyte include Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

Examples of the halide solid electrolyte include compounds represented by Li_{b}Me_{c}Y_{d}X₆. In the formula, the following equality and inequality are satisfied: b + mc + 3d = 6; and d > 0. The symbol Me is at least one element selected from the group consisting of metal elements other than Li and Y and metalloid elements. The symbol X is at least one selected from the group consisting of F, Cl, Br, and I. The value of m represents the valence of Me.

The metalloid elements are B, Si, Ge, As, Sb, and Te. The metal elements are all the elements (except H) included in Groups 1 to 12 of the periodic table and all the elements (except B, Si, Ge, As, Sb, Te, C, N, P, O, S, and Se) included in Groups 13 to 16 of the periodic table.

In order to increase the ionic conductivity of the halide solid electrolyte, Me may be at least one selected from the group consisting of Mg, Ca, Sr, Ba, Zn, Sc, Al, Ga, Bi, Zr, Hf, Ti, Sn, Ta, and Nb.

Examples of the halide solid electrolyte include compounds represented by Li_{α}Me'_{β}O_{γ}X'_{δ}. In the formula, α, β, γ, and δ are each greater than 0. The symbol Me' is at least one element selected from the group consisting of metalloid elements and metal elements other than Li. The symbol X' is at least one selected from the group consisting of Cl, Br, and I. The following mathematical inequalities and equality are satisfied: 0.9 ≤ α ≤ 1.2; β = 1.0; 1.0 ≤ γ ≤ 1.3; and 3.6 ≤ δ ≤ 4.0.

Examples of the oxide solid electrolyte include:
(i) NASICON solid electrolytes, such as LiTi₂(PO₄)₃ and element-substituted substances thereof;
(ii) perovskite solid electrolytes, such as (LaLi)TiO₃;
(iii) LISICON solid electrolytes, such as Li₁₄ZnGe₄O₁₆, Li₄SiO₄, LiGeO₄, and element-substituted substances thereof;
(iv) garnet solid electrolytes, such as Li₇La₃Zr₂O₁₂ and element-substituted substances thereof; and
(v) Li₃PO₄ and N-substituted substances thereof.

Examples of the polymer solid electrolyte include a compound of a polymer compound and a lithium salt. The polymer compound may have an ethylene oxide structure. The polymer compound having an ethylene oxide structure can contain a large amount of lithium salt, and thus has higher ionic conductivity. The polymer solid electrolyte may be, for example, a composite compound of polyethylene oxide and a lithium salt. Such a polymer solid electrolyte is, for example, lithium bis(trifluoromethanesulfonyl)imide.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used.

The positive electrode 201 incudes a material capable of intercalating and deintercalating metal ions, such as lithium ions. The positive electrode 201 includes, for example, a positive electrode active material (for example, the positive electrode active material particles 204).

Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include Li(Ni, Co, Al)O₂, Li(Ni, Co, Mn)O₂, and LiCoO₂.

In the present disclosure, the expression "(A, B, C)" represents "at least one selected from the group consisting of A, B, and C".

Lithium phosphate or a lithium-containing transition metal phosphate may be used as the positive electrode active material from the viewpoint of cost and safety of the battery 1000.

The positive electrode active material particles 204 may have a median diameter of 0.1 µm or more and 100 µm or less. In the case where the positive electrode active material particles 204 have a median diameter of 0.1 µm or more, the positive electrode active material particles 204 and the solid electrolyte particles 206 can be favorably dispersed in the positive electrode 201. This improves the charge and discharge characteristics of the battery 1000. In the case where the positive electrode active material particles 204 have a median diameter of 100 µm or less, the diffusion rate of Li in the positive electrode active material particles 204 improves. This can allow the battery 1000 to operate at high power.

The positive electrode active material particles 204 may have a median diameter larger than that of the solid electrolyte particles 206. This can allow favorable dispersion of the positive electrode active material particles 204 and the solid electrolyte particles 206.

In order to increase the energy density and power output of the battery 1000, a ratio of the volume of the positive electrode active material particles 204 to the sum of the volume of the positive electrode active material particles 204 and the volume of the solid electrolyte particles 206 may be 0.30 or more and 0.95 or less in the positive electrode 201.

In order to increase the energy density and power output of the battery 1000, the positive electrode 201 may have a thickness of 10 µm or more and 500 µm or less.

The solid electrolyte particle 206 included in the positive electrode 201 may be a sulfide solid electrolyte, a halide solid electrolyte, an oxide solid electrolyte, a polymer solid electrolyte, an organic polymer solid electrolyte, or the like.

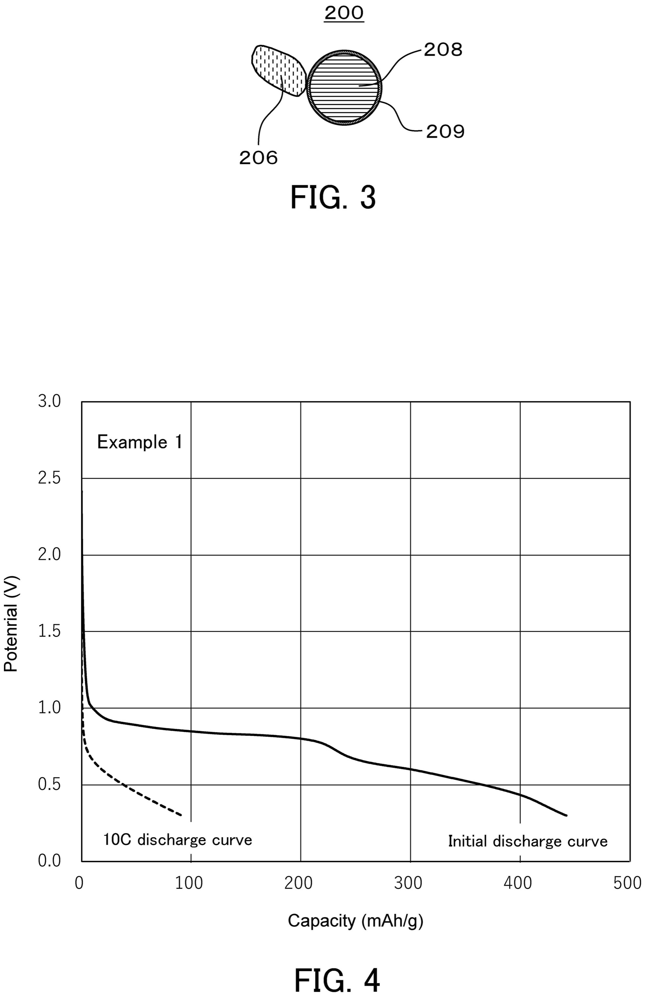

FIG. 3 is a cross-sectional view showing an electrode material 200 according to the second embodiment. The electrode material 200 may be included in at least one selected from the group consisting of the positive electrode 201 and the negative electrode 203. The electrode material 200 includes an electrode active material particle 208 and the solid electrolyte particle 206.

The electrode material 200 is, for example, included in the positive electrode 201. To prevent the solid electrolyte particle 206 from reacting with the positive electrode active material (namely, the electrode active material particle 208), a surface of the electrode active material particle 208 may be at least partially coated with a coating material 209. In this case, an increase of a reaction overvoltage of the battery 1000 can be suppressed.

The electrode material 200 may be included in the negative electrode 203. To prevent the solid electrolyte particle 206 from reacting with the negative electrode active material (namely, the electrode active material particle 208), the surface of the electrode active material particle 208 may be at least partially coated with the coating material 209. In this case, an increase of a reaction overvoltage of the battery 1000 can be suppressed.

The vanadium oxide composite 100 according to the first embodiment included in the negative electrode 203 may be further coated with the coating material 209. In this case, an increase of a reaction overvoltage of the battery 1000 can be suppressed.

Examples of the coating material 209 include a sulfide solid electrolyte, an oxide solid electrolyte, a polymer solid electrolyte, and a halide solid electrolyte.

The coating material 209 may be a halide solid electrolyte material or an oxide solid electrolyte material. The halide solid electrolyte material may include F. This improves stability of the coating material 209 at a high potential. Therefore, the battery 1000 has high charge and discharge efficiency. The oxide solid electrolyte may be lithium niobate or a polyanion material which has excellent stability even at a high potential. In this case, the battery 1000 has high charge and discharge efficiency.

Examples of the sulfide solid electrolyte include Li₂S-P₂S₅. Examples of the oxide solid electrolyte include trilithium phosphate. Examples of the polymer solid electrolyte include a composite compound of polyethylene oxide and a lithium salt. Examples of such a polymer solid electrolyte include lithium bis(trifluoromethanesulfonyl)imide.

The electrolyte layer 202 includes an electrolyte material. The electrolyte material is, for example, a solid electrolyte material. The electrolyte layer 202 may be a solid electrolyte layer. The solid electrolyte material included in the electrolyte layer 202 may be a sulfide solid electrolyte, a halide solid electrolyte, or a polymer solid electrolyte.

The electrolyte layer 202 may have a thickness of 1 µm or more and 100 µm or less. In the case where the electrolyte layer 202 has a thickness of 1 µm or more, short-circuiting between the positive electrode 201 and the negative electrode 203 is less likely to occur. In the case where the electrolyte layer 202 has a thickness of 100 µm or less, the battery 1000 can operate at high power.

In order to facilitate transfer of lithium ions and improve the output characteristics of the battery 1000, at least one selected from the group consisting of the positive electrode 201, the electrolyte layer 202, and the negative electrode 203 may include a nonaqueous electrolyte solution, a gel electrolyte, or an ionic liquid.

The nonaqueous electrolyte solution contains a nonaqueous solvent and a lithium salt dissolved in the nonaqueous solvent. Examples of the nonaqueous solvent include a cyclic carbonate solvent, a linear carbonate solvent, a cyclic ether solvent, a linear ether solvent, a cyclic ester solvent, a linear ester solvent, and a fluorinated solvent. Examples of the cyclic carbonate solvent include ethylene carbonate, propylene carbonate, and butylene carbonate. Examples of the linear carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the linear ether solvent include 1,2-dimethoxyethane and 1,2-diethoxyethane. Examples of the cyclic ester solvent include γ-butyrolactone. Examples of the linear ester solvent include methyl acetate. Examples of the fluorinated solvent include fluoroethylene carbonate, methyl fluoropropionate, fluorobenzene, fluoroethyl methyl carbonate, and fluorodimethylene carbonate. One nonaqueous solvent selected from these may be used alone. Alternatively, a mixture of two or more nonaqueous solvents selected from these may be used.

Examples of the lithium salt include LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these may be used alone. Alternatively, a mixture of two or more lithium salts selected from these may be used. The concentration of the lithium salt is, for example, 0.5 mol/liter or more and 2 mol/liter or less.

As the gel electrolyte, a polymer material impregnated with a nonaqueous electrolyte solution can be used. Examples of the polymer material include polyethylene oxide, polyacrylonitrile, polyvinylidene fluoride, polymethyl methacrylate, and a polymer having an ethylene oxide bond.

Examples of cations contained in the ionic liquid include:
(i) aliphatic linear quaternary salts, such as tetraalkylammoniums and tetraalkylphosphoniums;
(ii) aliphatic cyclic ammoniums, such as pyrrolidiniums, morpholiniums, imidazoliniums, tetrahydropyrimidiniums, piperaziniums, and piperidiniums; and
(iii) nitrogen-containing heterocyclic aromatic cations, such as pyridiniums and imidazoliums.

Examples of anions contained in the ionic liquid include PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

In order to increase adhesion between the particles, at least one selected from the group consisting of the positive electrode 201, the electrolyte layer 202, and the negative electrode 203 may contain a binder.

Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyethersulfone, hexafluoropolypropylene, styrenebutadiene rubber, and carboxymethylcellulose. A copolymer may also be used as the binder. Examples of such a binder include a copolymer of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more materials selected from the above-described materials may be used as the binder.

At least one selected from the positive electrode 201 and the negative electrode 203 may further include a conductive additive in order to increase electronic conductivity.

Examples of the conductive additive include:
(i) graphite, such as natural graphite or artificial graphite;
(ii) carbon black, such as acetylene black or ketjen black;
(iii) conductive fiber, such as carbon fiber or metal fiber;
(iv) fluorinated carbon;
(v) metal powder, such as aluminum powder;
(vi) conductive whiskers, such as a zinc oxide whisker or a potassium titanate whisker;
(vii) conductive metal oxides, such as titanium oxide; and
(viii) conductive polymer compounds, such as a polyaniline compound, a polypyrrole compound, and a polythiophene compound.

For cost reduction, the conductive additive of (i) or (ii) above may be used.

As shown in FIG. 2, the negative electrode 203 may further include a conductive additive 207 as well as the negative electrode active material particles 205. In this case, the negative electrode 203 has further enhanced electron conductivity.

Examples of the material of the conductive additive 207 are as described above.

A ratio of the volume of the conductive additive 207 to the sum of the volume of the negative electrode active material particles 205 and the volume of the conductive additive 207 may be 0.01 or more and 0.4 or less in the negative electrode 203. In this case, the negative electrode 203 has further enhanced electron conductivity.

Examples of the shape of the battery according to the second embodiment include coin type, cylindrical type, prismatic type, sheet type, button type, flat type, and stack type shapes.

The battery according to the second embodiment may be manufactured, for example, by preparing materials for forming a positive electrode, an electrolyte layer, and a negative electrode and then producing, by a known method, a stacked body in which the positive electrode, the electrolyte layer, and the negative electrode are disposed in this order.

### (Other embodiments)

### (Supplement)

According to the description of the above embodiments, the following techniques are disclosed.

### (Technique 1)

A vanadium oxide composite including:
a particle including a vanadium oxide represented by a composition formula (1) Li₃₊ₓ₊ₐV₁₋ₓMₓO_{4+a/2}, where 0 < a < 1 and 0 ≤ x < 1 are satisfied, and M is at least one element selected from the group consisting of a tetravalent metal element and a tetravalent metalloid element; and
an electrically conductive material at least partially coating a surface of the particle.

The vanadium oxide composite of Technique 1 is a new substance that can be used as a battery material. The vanadium oxide composite of Technique 1 can be used, for example, as a negative electrode active material. The vanadium oxide composite of Technique 1 is suitable, for example, for enhancing charge and discharge characteristics of a battery, and is suitable, for example, for increasing the battery capacity.

### (Technique 2)

The vanadium oxide composite according to Technique 1, wherein 0 < x < 1 is satisfied in the composition formula (1). In this case, the capacity of a battery including the vanadium oxide composite is further increased.

### (Technique 3)

The vanadium oxide composite according to Technique 1 or 2, wherein the electrically conductive material is a carbon material. In this case, the vanadium oxide composite can be produced at lower cost.

### (Technique 4)

The vanadium oxide composite according to any one of Techniques 1 to 3, wherein 0 < x ≤ 0.1 is satisfied in the composition formula (1). In this case, the capacity of a battery including the vanadium oxide composite is further increased.

### (Technique 5)

The vanadium oxide composite according to any one of Techniques 1 to 4, wherein the M includes Ti in the composition formula (1). In this case, the vanadium oxide composite can increase the battery capacity.

### (Technique 6)

The vanadium oxide composite according to any one of Techniques 1 to 5, wherein a surface coverage of the particle by the electrically conductive material is 30% or more. In this case, the vanadium oxide composite can increase the battery capacity.

### (Technique 7)

The vanadium oxide composite according to Technique 6, wherein the surface coverage is 40% or more. In this case, the vanadium oxide composite can further increase the battery capacity.

### (Technique 8)

The vanadium oxide composite according to Technique 6, wherein the surface coverage is 55% or more. In this case, the vanadium oxide composite can further increase the battery capacity.

### (Technique 9)

The vanadium oxide composite according to Technique 6, wherein the surface coverage is 70% or less. In this case, insertion of Li into and extraction of Li from the vanadium oxide composite can be facilitated while the electron conductivity is ensured.

### (Technique 10)

A battery including:
a positive electrode;
a negative electrode; and
an electrolyte layer disposed between the positive electrode and the negative electrode, wherein
the negative electrode includes the vanadium oxide composite according to any one of Techniques 1 to 9.

The battery of Technique 10 has excellent charge and discharge characteristics.

### (Technique 11)

The battery according to Technique 10, wherein the negative electrode further includes a conductive additive. In this case, the negative electrode has further enhanced electron conductivity.

### EXAMPLES

Hereinafter, details of the present disclosure will be described with reference to examples and comparative examples. The vanadium oxide included in the vanadium oxide composites of the examples can be represented by a composition formula (1) Li₃₊ₓ₊ₐVᵢ₋ₓMₓO_{4+a/2} (x = 0).

### (Example 1)

### [Production of vanadium oxide composite]

An amount of 1.47 g of lithium hydroxide monohydrate (LiOH·H₂O, manufactured by FUJIFILM Wako Pure Chemical Corporation, Wako Special Grade) and 0.176 g of ammonium vanadate (NH₄VO₃, manufactured by FUJIFILM Wako Pure Chemical Corporation, Wako Special Grade) were prepared as raw material powders of a vanadium oxide at a molar ratio of LiOH·H₂O:NH₄VO₃ = 23.3:1. An amount of 2.5 mL of a water-based graphene oxide dispersion (manufactured by Sigma-Aldrich Co., LLC.; graphene oxide concentration: 0.004 g/mL) was prepared as an electrically conductive material such that the weight of graphene oxide in the water-based dispersion was 5.7 wt% relative to the weight of NH₄VO₃. These raw materials were dissolved in 37.5 mL of purified water to give a raw material solution. The raw material solution was subjected to a dispersion treatment for 90 minutes by ultrasonic irradiation using a ultrasonic disperser (UH-50 manufactured by SMT Co., Ltd.) to give a dispersion solution. The dispersion solution was poured into an aluminum dish, followed by heating in an aluminum bead bath at 150°C for 50 minutes in air to give a heated solution. The heated solution was subjected to a centrifugation treatment to be separated into a supernatant solution and a precipitation. The precipitation was rinsed with purified water, and then dried at 70°C for one hour in vacuum to give dried powder. The dried powder was ground in a mortar, and was then fired at 600°C for two hours in a nitrogen atmosphere. In the firing, the temperature increase rate was 10°C per minute, and the temperature decrease rate was 5°C per minute. After the firing, the resulting powder weighed 0.2 g. A vanadium oxide composite of Example 1 was produced in this manner.

In the vanadium oxide composite of Example 1, "a" in the composition formula (1) was 0.5.

The symbol "a" in the composition formula (1) was determined by analyzing the amount of Li in the vanadium oxide composite using an atomic absorption spectrophotometer (Z-2300 manufactured by Hitachi High-Technologies Corporation).

In the vanadium oxide composite of Example 1, the electrically conductive material at least partially coated the surface of the particle including the vanadium oxide. The surface coverage R of the particle including the vanadium oxide of Example 1 by the electrically conductive material was 35%.

The surface coverage R was determined by the method described above. Specifically, first, the particles of the vanadium oxide composite and zinc powder were mixed in a mortar to give a powder mixture. The powder mixture was subjected to compression molding to form a pellet. Next, the pellet was processed using an ion milling apparatus (ArBlade5000 manufactured by Hitachi High-Technologies Corporation) to form a flat and smooth cross-section. The formed cross-section was observed using a field-emission scanning electron microscope (FE-SEM, Regulus 8230 manufactured by Hitachi High-Technologies Corporation) to obtain an FE-SEM image. For each of 50 particles of the vanadium oxide composite in the FE-SEM image, a perimeter P thereof and a total length C of portion(s) coated with the electrically conductive material were measured. An average of values calculated by 100 × C/P was considered the surface coverage R.

It should be noted that a portion of the electrically conductive material included in the vanadium oxide composite was not thick enough for FE-SEM observation. For example, by observing a cross-section of the pellet using a transmission electron microscope (TEM), the presence of the electrically conductive material having a thickness of 3 nm or less was able to be confirmed not only on the surface of the particle including the vanadium oxide but also inside the particle including the vanadium oxide, i.e., at the interface between primary particles. Therefore, for example, the surface coverage R is determined using the electrically conductive material having a thickness of more than 3 nm.

### [Production of battery]

In an argon atmosphere with a dew point of -60°C or lower, the vanadium oxide composite of Example 1 and a solid electrolyte Li₃PS₄ were prepared at a volume ratio of 60:40. These materials were mixed in an agate mortar. A negative electrode mixture was obtained in this manner.

In an insulating cylinder having an inner diameter of 9.5 mm, a solid electrolyte Li₃PS₄ (80 mg) and the negative electrode mixture (6.5 mg) were stacked to give a stacked body. A pressure of 360 MPa was applied to the stacked body to form an electrolyte layer and a negative electrode. The electrolyte layer had a thickness of 500 µm.

Next, Li (thickness: 300 µm) was stacked on the electrolyte layer, and a pressure of 80 MPa was applied to the resulting stacked body to form a positive electrode.

Next, current collectors formed of stainless steel were attached to the positive electrode and the negative electrode, and a current collector lead was attached to each of the current collectors.

Finally, an insulating ferrule was used to isolate the interior of the insulating cylinder from the outside air atmosphere, thereby sealing the interior of the cylinder.

A battery of Example 1 was produced in the above manner. The battery of Example 1 is a monopolar test cell in which the negative electrode is used as a working electrode and the positive electrode is used as a counter electrode, and such a cell is used for testing the performance of the negative electrode. Specifically, the negative electrode to be tested is used as a working electrode, and an appropriate active material in an amount sufficient for a reaction of the working electrode is used for a counter electrode. To test the performance of the negative electrode, metal Li was used as the counter electrode. The negative electrode which was tested for the performance by using such a test cell can be used for a secondary battery, for example, in combination with a positive electrode including a positive electrode active material, such as a Li-containing transition metal oxide, as described in the above embodiments.

### [Charge and discharge test]

The following charge and discharge test was performed by using the battery of Example 1. As described above, the battery of Example 1 is a monopolar test cell, and corresponds to a negative electrode half cell. Therefore, in the case of the battery of Example 1, a direction in which the potential of the half cell decreases by insertion of Li ions into the negative electrode is called charging, and a direction in which the potential increases is called discharging. That is, charging of the battery of Example 1 is substantially (i.e., in the case of a full cell) discharging, and discharging of the battery of Example 1 is substantially charging. Hereinafter, charging means charging in a half cell, and discharging means discharging in a half cell, unless otherwise specified.

The battery was disposed in a thermostatic chamber maintained at 25°C.

Constant current discharging was performed at a current value corresponding to 0.1 C rate (10-hour rate) with respect to the theoretical capacity of the battery, and the discharging was finished when the voltage reached 0.3 V. Next, constant current charging was performed at a current value corresponding to 0.05 C rate, and the charging was finished when the voltage reached 2.5 V. This charge-discharge cycle is called an "initial charge-discharge cycle".

After the initial charge-discharge cycle, constant current discharging was performed at a current value corresponding to 0.1 C rate with respect to the theoretical capacity of the battery, and the discharging was finished when the voltage reached 0.3 V. Next, constant current charging was performed at a current value corresponding to 0.05 C rate, and the charging was finished when the voltage reached 2.5 V. This charge-discharge cycle is called a "second charge-discharge cycle".

After the second charge-discharge cycle, constant current discharging was performed at a current value corresponding to 10C rate with respect to the theoretical capacity of the battery, the discharging was finished when the voltage reached 0.3 V. Next, constant current charging was performed at a current value corresponding to 0.05 C rate, and the charging was finished when the voltage reached 2.5 V. This charge-discharge cycle is called a "10C charge-discharge cycle". In the 10C charge-discharge cycle, a discharge capacity measured under the constant current discharging at 10 C rate is called a "10C discharge capacity".

FIG. 4 is a graph showing initial discharge characteristics and 10C discharge characteristics of the battery of Example 1. In FIG. 4, the horizontal axis represents discharge capacity (mAh/g), and the vertical axis represents voltage (V). According to the charge and discharge test including the sequence of the initial, second, and 10C charge-discharge cycles, the battery of Example 1 had a 10C discharge capacity of 91.2 mAh/g.

### (Examples 2 and 3, Comparative Examples 1 and 2)

### [Production of vanadium oxide composite]

In Example 2, 3.75 mL of a water-based graphene oxide dispersion was prepared such that the weight of graphene oxide in the water-based dispersion was 8.5 wt% relative to the weight of NH₄VO₃. Additionally, the all raw materials were dissolved in 36.25 mL of purified water to give a raw material solution. A vanadium oxide composite of Example 2 was obtained in the same manner as in Example 1 except for these. In the vanadium oxide composite of Example 2, "a" in the composition formula (1) was 0.5. The surface coverage R of Example 2 was 61%.

In Example 3, 5 mL of a water-based graphene oxide dispersion was prepared such that the weight of graphene oxide in the water-based dispersion was 11.4 wt% relative to the weight of NH₄VO₃. Additionally, the all raw materials were dissolved in 35 mL of purified water to give a raw material solution. A vanadium oxide composite of Example 3 was obtained in the same manner as in Example 1 except for these. In the vanadium oxide composite of Example 3, "a" in the composition formula (1) was 0.5. The surface coverage R of Example 3 was 81%.

In Comparative Example 1, no water-based graphene oxide dispersion was used. Additionally, the all raw materials were dissolved in 40 mL of purified water to give a raw material solution. A vanadium oxide composite of Comparative Example 1 was obtained in the same manner as in Example 1 except for these. That is, no portion of the surface of the vanadium oxide composite of Comparative Example 1 was coated with the electrically conductive material. In the vanadium oxide composite of Comparative Example 1, "a" in the composition formula (1) was 0.5.

In Comparative Example 2, 0.316 g of LiOH·H₂O and 0.176 g of NH₄VO₃ were prepared at a molar ratio of LiOH·H₂O:NH₄VO₃ = 5:1. An amount of 3.75 mL of a water-based graphene oxide dispersion was prepared such that the weight of graphene oxide in the water-based dispersion was 8.5 wt% relative to the weight of NH₄VO₃. Additionally, the all raw materials were dissolved in 77.5 mL of purified water to give a raw material solution. A vanadium oxide composite of Comparative Example 2 was obtained in the same manner as in Example 1 except for these. In the vanadium oxide composite of Comparative Example 2, "a" in the composition formula (1) was 0. That is, the vanadium oxide included in the vanadium oxide composite of Comparative Example 2 did not include Li and O in amounts comparable to those expressed with "a" in the composition formula (1). The surface coverage R of Comparative Example 2 was 41%.

### [Production of battery]

Batteries of Examples 2 and 3 and Comparative Example 2 were produced in the same manner as in Example 1 using the vanadium oxide composites of Examples 2 and 3 and Comparative Example 2.

In production of a battery of Comparative Example 1, the vanadium oxide composite of Comparative Example 1 and a solid electrolyte Li₃PS₄ were prepared at a volume ratio of 60:40 in an argon atmosphere with a dew point of -60°C or lower. Additionally, acetylene black was prepared as a conductive additive. The acetylene black was prepared such that the weight thereof was 5.7 wt% relative to the NH₄VO₃ used to produce the vanadium oxide. These materials were mixed in an agate mortar to give a negative electrode mixture of Comparative Example 1. A battery of Comparative Example 1 was produced in the same manner as in Example 1, except that the negative electrode mixture of Comparative Example 1 was used as a negative electrode mixture.

### [Charge and discharge test]

The charge and discharge test was performed for the batteries of Examples 2 and 3 and Comparative Examples 1 and 2 in the same manner as in Example 1 so as to measure their 10C discharge capacities. Table 1 shows the measurement results.

**[Table 1]**

| | Vanadium oxide composite | | Negative electrode mixture | Battery |
|---|---|---|---|---|
| | Li₃₊ₓ₊ₐV₁₋ₓMₓO_{4+a/2} (x = 0) | Surface coverage R by electrically conductive material (%) | Conductive additive | 10C discharge capacity (mAh/g) |
| Example 1 | a = 0.5 | 35 | - | 91.2 |
| Example 2 | a = 0.5 | 61 | - | 184.6 |
| Example 3 | a = 0.5 | 81 | - | 139.9 |
| Comparative Example 1 | a = 0.5 | 0 | Acetylene black | 0 |
| Comparative Example 2 | a = 0 | 41 | - | 0 |

### (Discussion)

As can be understood from comparison between the 10C discharge capacities of Examples 1 to 3 and those of Comparative Examples 1 and 2, the batteries of Examples 1 to 3 including the vanadium oxide composites in which 0 < a < 1 and 0 ≤ x < 1 are satisfied in the composition formula (1) had a high discharge capacity even at as high a rate as 10 C. For the vanadium oxide composites of Examples 1 to 3, the surface coverage R was 30% or more.

When "a" in the composition formula (1) is greater than 0, i.e., in the case of composition with an excessive amount of Li, as in the vanadium oxide composites of Examples 1 to 3, a vanadium oxide composite includes a large amount of Li which is responsible for charging and discharging in batteries. This is thought to be the reason why the batteries of Examples 1 to 3 had a high 10C discharge capacity. However, it is inferred that when there is an overly excessive amount of Li, the Li ion conductivity decreases because the Li is too densely packed to diffuse properly during charging and discharging of a battery.

The weight (5.7 wt%) of the graphene oxide included in the vanadium oxide composite of Example 1 was the same as the weight (5.7 wt%) of the acetylene black included in the negative electrode mixture of Comparative Example 1. However, the 10C discharge capacity of the battery of Example 1 was higher than that of the battery of Comparative Example 1. This result has revealed that a battery having a higher 10C discharge capacity is achieved when the electrically conductive material is present to coat the surface of the particle including the vanadium oxide rather than dispersed in the negative electrode mixture as a conductive additive.

In Examples 1 to 3, by using the vanadium oxide composite in which the vanadium oxide has appropriate composition and in which the surface of the particle including the vanadium oxide is coated with the electrically conductive material at an appropriate coverage, the negative electrode mixtures having excellent electron conductivity and excellent Li ion conductivity were able to be obtained. The batteries having a high discharge capacity even at as high a rate as 10 C were able to be produced using such negative electrode mixtures.

As described above, the vanadium oxide composite according to the present disclosure is suitable for providing a battery having excellent charge and discharge characteristics even at a high rate.

### INDUSTRIAL APPLICABILITY

The vanadium oxide composite of the present disclosure is used as a battery material, such as a material of an all-solid-state lithium ion secondary battery.

## Claims

1. A vanadium oxide composite comprising:
a particle including a vanadium oxide represented by a composition formula (1) Li₃₊ₓ₊ₐV₁₋ₓMₓO_{4+a/2}, where 0 < a < 1 and 0 ≤ x < 1 are satisfied, and M is at least one element selected from the group consisting of a tetravalent metal element and a tetravalent metalloid element; and
an electrically conductive material at least partially coating a surface of the particle.

2. The vanadium oxide composite according to claim 1, wherein 0 < x < 1 is satisfied in the composition formula (1).

3. The vanadium oxide composite according to claim 1, wherein the electrically conductive material is a carbon material.

4. The vanadium oxide composite according to claim 1, wherein 0 < x ≤ 0.1 is satisfied in the composition formula (1).

5. The vanadium oxide composite according to claim 1, wherein the M includes Ti in the composition formula (1).

6. The vanadium oxide composite according to claim 1, wherein a surface coverage of the particle by the electrically conductive material is 30% or more.

7. The vanadium oxide composite according to claim 6, wherein the surface coverage is 40% or more.

8. The vanadium oxide composite according to claim 6, wherein the surface coverage is 55% or more.

9. The vanadium oxide composite according to claim 6, wherein the surface coverage is 70% or less.

10. A battery comprising:
a positive electrode;
a negative electrode; and
an electrolyte layer disposed between the positive electrode and the negative electrode, wherein
the negative electrode includes the vanadium oxide composite according to any one of claims 1 to 9.

11. The battery according to claim 10, wherein the negative electrode further includes a conductive additive.
